# EUROPÄISCHE PATENTSCHRIFT

(11) **EP 1 235 429 B1**
(45) Veröffentlichungstag und Bekanntmachung des Hinweises auf die Patenterteilung: **13.04.2011**
(21) Anmeldenummer: 02003630.7
(22) Anmeldetag: 16.02.2002
(51) Int. Cl.: H04N 7/088, H04N 7/20

(54) **Vorrichtung zur Erzeugung eines Audiokennsignals**
Device for generating an audio identifying signal
Dispositif de génération d'un signal d'identification audio

(30) Priorität: 24.02.2001 DE 10109116
(43) Veröffentlichungstag der Anmeldung: 28.08.2002
(73) Patentinhaber: GSS Grundig SAT Systems GmbH, 90471 Nürnberg (DE)
(72) Erfinder: Mollek, Martin, 90459 Nürnberg (DE)
(74) Vertreter: Götz, Georg Alois

(56) Entgegenhaltungen:
- DE-A- 3 411 259
- DE-A- 19 517 743
- KRIEBEL H ET AL: "SATELLITEN-TV-EMPFANG MIT MEHRKANALTON" RADIO FERNSEHEN ELEKTRONIK, VEB VERLAG TECHNIK. BERLIN, DE, Bd. 43, Nr. 5, 1. Mai 1994 (1994-05-01), Seiten 32-34, XP000478287 ISSN: 1436-1574
- PATENT ABSTRACTS OF JAPAN vol. 1997, no. 02, 28. Februar 1997 (1997-02-28) & JP 08 275070 A (TOSHIBA CORP), 18. Oktober 1996 (1996-10-18)

## Beschreibung

Die Erfindung betrifft eine Vorrichtung zur Erzeugung eines Audiokennsignals.

Bei analogen terrestrischen Fernsehübertragungssystemen ist es bereits bekannt, senderseitig ein Audiokennsignal in Form einer charakteristischen Trägermodulation zu generieren, welches Auskunft darüber gibt, ob eine Fernsehsendung von einem Mono-, Stereo- oder zweisprachigen Audiosignal begleitet wird. Dieses Audiokennsignal wird in das zu übertragende Fernsehrundfunksignal eingesetzt und zur Empfangsseite übertragen. In einem dort vorgesehenen Fernsehgerät wird es ausgewertet und dazu verwendet, den Lautsprechern das jeweils gewünschte Audiosignal zuzuführen.

Ein derartiges Audiokennsignal steht jedoch nicht stets zur Verfügung. Beispielsweise bei einer Übertragung von Fernsehrundfunkbeiträgen über Satellit wird kein derartiges Audiokennsignal übertragen.

Der DE-Zeitungsartikel "Satelliten-TV-Empfang mit Mehrkanalton" von Henning Kriebel und Jörg Schubert aus Radio-Fernsehen-Elektronik, VEB Verlag, Technik Berlin, Band 43, Nr. 5, 01. Mai 1994, Seiten 32-34, ISSN: 1436-1574 beschreibt Gemeinschaftsantennen-Anlagen, die terrestrische Fernsehprogramme empfangen und in Stereo- bzw. Zweikanalton verarbeiten. Satellitenfernsehprogramme würden jedoch meist nur monophon verarbeitet. Ziel ist es, über Satellit kommende TV-Programme auch in Mehrkanalton zu verarbeiten. Dazu wird eine Gemeinschaftsantennen-Komponente für die Satelliten-TV-Programmaufbereitung mit Stereo- bzw. Zweikanalton vorgeschlagen.

DE 38 43 451 A1 beschreibt einen Satelliten-, Fernseh- und Ton-Rundfunkübertragungssystem. Ziel ist es bei Satelliten-, Fernseh- und Ton-Rundfunkübertragungssystemen, bei denen zu jedem von einem Satelliten ausgestrahlten Fernsehprogramm mehrere Tonunterträger gehören, die automatische Auswahl der mit verschiedenen Sprachsignalen und/oder Stereosignalen modulierten Tonunterträger zu ermöglichen. Dazu wird vorgeschlagen, die empfangenen Signale durch Informationen zu ergänzen, die den Modulationsinhalt der einzelnen Tonunterträger charakterisieren. Modulationsinhalte sind verschiedensprachige monophone oder stereophone Begleittöne. In der Empfangsstation werden die Informationen mittels einer Auswertungs- und Ansteuereinheit derart ausgewertet, dass bestimmte ausgewählte modulierte Tonunterträger zur Auswertung kommen. Die Auswahl bestimmter Tonunterträger geschieht folgendermaßen: Das von einem Nachrichtensatelliten ausgesendete Satellitensignal enthält Informationen, die den Inhalt der jeweiligen Modulation der einzelnen Tonunterträger kennzeichnen, zum Beispiel Mono, Stereo oder Zweiton. Die vorzugsweise mikroprozessorgesteuerte Auswertungs- und Ansteuereinheit wertet diese Informationen aus und stellt den Tondemodulator oder die Tondemulatoren entsprechend ihrer Programmierung auf die jeweilige Frequenz ein.

Die von der Auswertungs- und Ansteuereinheit an ihrem Ausgang gelieferten Steuersignale dienen zur Ansteuerung eines Stereo/Zweiton-Coders. Die Steuersignale besagen, ob der Begleitton ein monophoner Ton, ein Stereoton oder ein Zweiton ist. Die von dem Stereo/Zweiton-Koder abgegebenen Signale werden einem Tonmodulator zugeführt, der die TV-Zf-Tonunterträgersignale an die Eingänge eines Bildmodulators weiterleitet. Die in dem Bildmodulator modulierten Signale werden dann in einem Hochfrequenzumsetzer entweder in den VHF-Bereich oder in den UHF-Bereich umgesetzt. Die am Ausgang vorliegenden, umgesetzten Signale lassen sich anschließend in ein Übertragungsnetz einspeisen, an das Fernseh- und Rundfunkteilnehmer angeschlossen sind.

Aus der DE 195 17 743 A1 ist eine Schaltungsanordnung zur Erzeugung eines Stereo-TV-Signals mit Zweitonträger-Verfahren für Video-Rekorder, Satelliten-Empfänger, Satelliten-Kopfstationen und dergleichen bekannt. Die Zweitonkanäle (Audio-R, Audio-L) sowie ein vom Videosignal abgeleitetes Video-Synchron-Signal werden einem Stereo-Coder zugeführt. Dieser erzeugt daraus für den ersten Tonkanal ein Stereo-NF-Signal und für den zweiten Tonkanal ein zweites Stereo-NF-Signal und ein Pilotsignal (Hilfsträger). Letzteres besteht aus einem Pilotträger, dessen Amplitude mit einer Kennfrequenz moduliert ist. Der Stereo-Coder ist für drei Betriebsarten "Mono", "Stereo" und "Zweiton" ausgelegt. Als Referenzfrequenz für die Pilotträgerfrequenz und die Kennfrequenzen dient eine Zeilenrücklauffrequenz, die aus einem dem Stereo-Coder zugeführten Video-Synchron-Signal gewonnen wird.

Dem gegenüber wird die im Patentanspruch 1 vorgeschlagene Vorrichtung zur Erzeugung eines Audiokennsignals vorgeschlagen. Zweckmäßige Ausbildungen dieser Erfindung ergeben sich aus den abhängigen Ansprüchen.

Die Vorteile der Erfindung bestehen insbesondere darin, dass herkömmliche Fernsehempfänger, die mit Mitteln zur Auswertung der bei analoger terrestrischer Fernsehübertragung üblicherweise übertragenen Audiokennsignale versehen sind, ohne jegliche Erweiterung oder sonstige Modifikation auch zum Empfang und zur Wiedergabe von Fernsehsignalen verwendet werden können, die über andere Übertragungswege übertragen werden. Dabei kann es sich beispielsweise um über Satellit übertragene und in Kopfstationen aufbereitete Fernsehrundfunksignale oder um lokal unter Verwendung eines Stereomodulators generierte Fernsehsignale handeln. Die Erfindung ist im Zusammenhang mit allen herkömmlichen Fernsehgeräten verwendbar, die nach den Normen D/K, CCIR-BG oder OIRT-D/K arbeiten.

Weitere vorteilhafte Eigenschaften der Erfindung ergeben sich aus der Erläuterung zweier Ausführungsbeispiele anhand der Figuren. Es zeigt:
Figur 1 ein Blockschaltbild eines ersten Ausführungsbeispiels für die Erfindung und
Figur 2 ein Blockschaltbild eines zweiten Ausführungsbeispiels für die Erfindung.

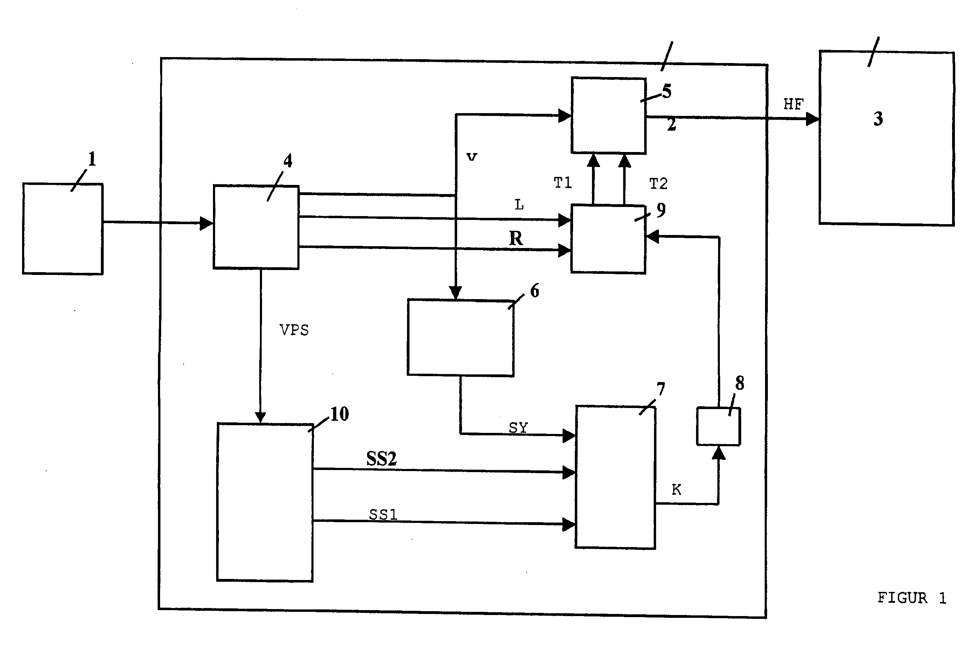

Die Figur 1 zeigt ein Blockschaltbild eines ersten Ausführungsbeispiels für die Erfindung. Bei diesem werden von einer Satelliten-Antenneneinheit 1 abgeleitete Fernsehsignale in einer Kopfstation 2 aufbereitet und von dort aus einem herkömmlichen Fernsehgerät 3 zugeführt.

Die Kopfstation 2 weist ein Empfangsteil 4 auf, welches ausgangsseitig auf getrennten Ausgangsleitungen ein Videosignal V, ein Linkskanal-Audiosignal L und ein Rechtskanal-Audiosignal R zur Verfügung stellt. Das Videosignal V wird einem Synchronsignalseparator 6 und einem HF-Modulator 5 zugeführt. Die im Synchronsignalseparator 6 aus dem Videosignal V abgetrennten Synchronsignale SY gelangen an einen Hilfsträgergenerator 7, bei dem es sich um einen Mikrocontroller mit Festoszillator handelt.

Das Empfangsteil 4 stellt an einem weiteren Ausgang ein aus dem Videosignal V abgetrenntes VPS-Signal zur Verfügung. Dieses enthält Informationen, die die momentan übertragene Fernsehsendung näher beschreiben und üblicherweise zum zeitgerechten Starten eines an das Fernsehgerät 3 angeschlossenen Videorecorders verwendet werden. So sind im VPS-Signal beispielsweise Informationen über den Sendetag, die Startund Endzeit der Sendung, die jeweilige Signalquelle und den Titel der Sendung enthalten. Weiterhin enthält das VPS-Signal auch Informationen, die das das jeweilige Bildsignal begleitende Audiosignal als Monosendung, Stereosendung oder zweisprachiges Audiosignal kennzeichnen.

Diese das Audiosignal kennzeichnenden, im VPS-Signal enthaltenen Informationen werden in einem Umwandler 10 aus dem VPS-Signal abgetrennt und auf getrennten Ausgangsleitungen der Umwandlungseinheit 10 in Form von Einbit-Steuersignalen SS1 und SS2 zur Verfügung gestellt. Diese Steuersignale SS1 und SS2 werden als weitere Eingangssignale an den Hilfsträgergenerator 7 weitergeleitet.

Ein Beispiel für eine mögliche Codierung der Steuersignale SS1 und SS2 ergibt sich aus der nachfolgenden Tabelle:

| | SS1 | SS2 |
|---|---|---|
| Monosendung | 1 | 1 |
| Stereosendung | 1 | 0 |
| Zweisprachige Sendung | 0 | 1 |

Der Hilfsträgergenerator 7 generiert in Abhängigkeit von seinen Eingangssignalen ein Audiokennsignal K, bei welchem es sich um ein Hilfsträgersignal von 54,687 kHz handelt, welches mit den Zeilenimpulsen des Videosignals synchronisiert ist und in Abhängigkeit vom Vorliegen einer Mono-, Stereo- oder zweisprachigen Sendung in unterschiedlicher Weise amplitudenmoduliert ist. Die genannte Hilfsträgerfrequenz entspricht dem 3,5-fachen Wert der Zeilenfrequenz von 15,624857 kHz. Liegt eine Monosendung vor, dann erfolgt keine Amplidutenmodulation des Hilfsträgers. Liegt eine Stereosendung vor, dann erfolgt eine Amplitudenmodulation des Hilfsträgers mit einem Faktor 1/57 der Zeilenfrequenz, d. h. mit 274,1 Hz. Liegt eine zweisprachige Sendung vor, dann erfolgt eine Amplitudenmodulation des Hilfsträgers mit einem Faktor 1/133 der Zeilenfrequenz, d. h. mit 117,5 Hz.

Das am Ausgang des Hilfsträgergenerators 7 bereitgestellte Audiokennsignal K wird über ein Tiefpassfilter 8 einer Audio-Matrix 9 zugeführt. Dieser erzeugt aus dem ihm ebenfalls zugeführten Linkskanal-Audiosignal L, dem Rechtskanal-Audiosignal R und dem Audiokennsignal K ein erstes Tonträgersignal T1 und ein zweites Tonträgersignal T2, wobei das zweite Tonträgersignal T2 mit dem Audiokennsignal K moduliert ist.

Diese beiden Tonträgersignale T1 und T2 werden dem HF-Modulator 5 zugeführt und zusammen mit dem Videosignal einer HF-Modulation unterworfen. Das Ausgangssignal des HF-Modulators 5 wird an einem Ausgang der Kopfstation 2 zur Verfügung gestellt und von dort aus als HF-Fernsehrundfunksignal einem herkömmlichen, beispielsweise nach dem PAL-Standard arbeitenden Fernsehgerät 3 zugeleitet.

Dort wird das Audiokennsignal K, das dem bei analoger terrestrischer Fernsehübertragung vorliegenden Audiokennsignal entspricht, in üblicher Weise ausgewertet und zur Ansteuerung der Lautsprecher mit den jeweiligen Audiosignalen verwendet. So erfolgt beim Vorliegen einer Monosendung eine Ansteuerung beider Lautsprecher mit dem Signal (R+L)/2, beim Vorliegen einer Stereosendung eine Ansteuerung des linken Lautsprechers mit dem Signal L und des rechten Lautsprechers mit dem Signal R und beim Vorliegen einer zweisprachigen Sendung eine Wiedergabe der Sendung in der jeweils mittels der Bedieneinheit ausgewählten Sprache.

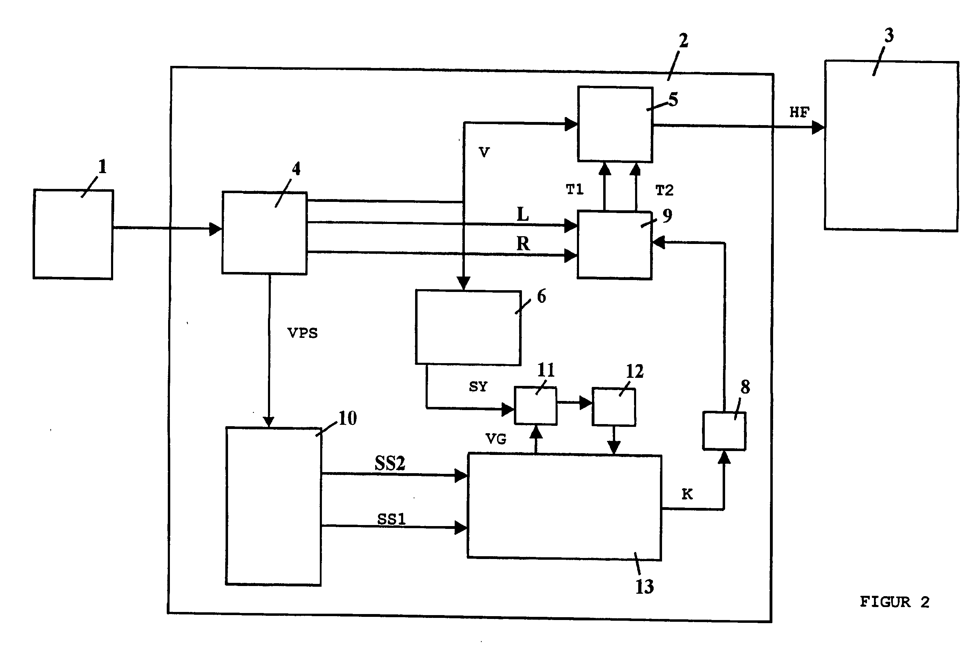

Die Figur 2 zeigt ein Blockschaltbild eines zweiten Ausführungsbeispiels für die Erfindung. Bei diesem werden von einer Satelliten-Antenneneinheit 1 abgeleitete Fernsehsignale in einer Kopfstation 2 aufbereitet und von dort aus einem herkömmlichen Fernsehgerät 3 zugeführt.

Die Kopfstation 2 weist ein Empfangsteil 4 auf, welches ausgangsseitig auf getrennten Ausgangsleitungen ein Videosignal V, ein Linkskanal-Audiosignal L und ein Rechtskanal-Audiosignal R zur Verfügung stellt. Das Videosignal V wird einem Synchronsignalseparator 6 und einem HF-Modulator 5 zugeführt. Die im Synchronsignalseparator 6 aus dem Videosignal V abgetrennten Synchronsignale SY gelangen an einen Phasenvergleicher 11.

Das Empfangsteil 4 stellt an einem weiteren Ausgang ein aus dem Videosignal V abgetrenntes VPS-Signal zur Verfügung. Dieses enthält Informationen, die die momentan übertragene Fernsehsendung näher beschreiben und üblicherweise zum zeitgerechten Starten eines an das Fernsehgerät 3 angeschlossenen Videorecorders verwendet werden. So sind im VPS-Signal beispielsweise Informationen über den Sendetag, die Startund Endzeit der Sendung, die jeweilige Signalquelle und den Titel der Sendung enthalten. Weiterhin enthält das VPS-Signal auch Informationen, die das das jeweilige Bildsignal begleitende Audiosignal als Monosendung, Stereosendung oder zweisprachiges Audiosignal kennzeichnen.

Diese das Audiosignal kennzeichnenden, im VPS-Signal enthaltenen Informationen werden in einem Umwandler 10 aus dem VPS-Signal abgetrennt und auf getrennten Ausgangsleitungen der Umwandlungseinheit 10 in Form von Einbit-Steuersignalen SS1 und SS2 zur Verfügung gestellt. Diese Steuersignale SS1 und SS2 werden als Eingangssignale an den Hilfsträgergenerator 13 weitergeleitet.

Ein Beispiel für eine mögliche Codierung der Steuersignale SS1 und SS2 ergibt sich aus der nachfolgenden Tabelle:

| | SS1 | SS2 |
|---|---|---|
| Monosendung | 1 | 1 |
| Stereosendung | 1 | 0 |
| Zweisprachige Sendung | 0 | 1 |

Der Hilfsträgergenerator 13 gibt einen Vergleichsimpuls VG aus, welcher im Phasenvergleicher 11 mit den Synchronsignalen phasenverglichen wird. Das Ausgangssignal des Phasenvergleichers dient zur Ansteuerung eines spannungsgesteuerten Oszillators 12, dessen Ausgangssignal dem Hilfsträgergenerator 13 zugeführt wird. Mittels des spannungsgesteuerten Oszillators 12 wird ein Hilfsträgersignal von 54,687 kHz erzeugt.

Der Hilfsträgergenerator 13 generiert in Abhängigkeit von seinen Eingangssignalen ein Audiokennsignal K, bei welchem es sich um das Hilfsträgersignal von 54,687 kHz handelt, welches mit den Zeilenimpulsen des Videosignals synchronisiert ist und in Abhängigkeit vom Vorliegen einer Mono-, Stereo- oder zweisprachigen Sendung in unterschiedlicher Weise amplitudenmoduliert ist. Die genannte Hilfsträgerfrequenz entspricht dem 3,5-fachen Wert der Zeilenfrequenz von 15,624857 kHz. Liegt eine Monosendung vor, dann erfolgt keine Amplidutenmodulation des Hilfsträgers. Liegt eine Stereosendung vor, dann erfolgt eine Amplitudenmodulation des Hilfsträgers mit einem Faktor 1/57 der Zeilenfrequenz, d. h. mit 274,1 Hz. Liegt eine zweisprachige Sendung vor, dann erfolgt eine Amplitudenmodulation des Hilfsträgers mit einem Faktor 1/133 der Zeilenfrequenz, d. h. mit 117,5 Hz.

Das am Ausgang des Hilfsträgergenerators 13 bereitgestellte Audiokennsignal K wird über ein Tiefpassfilter 8 einer Audio-Matrix 9 zugeführt. Dieser erzeugt aus dem ihm ebenfalls zugeführten Linkskanal-Audiosignal L, dem Rechtskanal-Audiosignal R und dem Audiokennsignal K ein erstes Tonträgersignal T1 und ein zweites Tonträgersignal T2, wobei das zweite Tonträgersignal T2 mit dem Audiokennsignal K moduliert ist.

Diese beiden Tonträgersignale T1 und T2 werden dem HF-Modulator 5 zugeführt und zusammen mit dem Videosignal einer HF-Modulation unterworfen. Das Ausgangssignal des HF-Modulators 5 wird an einem Ausgang der Kopfstation 2 zur Verfügung gestellt und von dort aus als HF-Fernsehrundfunksignal einem herkömmlichen, beispielsweise nach dem PAL-Standard arbeitenden Fernsehgerät 3 zugeleitet.

Dort wird das Audiokennsignal K, das dem bei analoger terrestrischer Fernsehübertragung vorliegenden Audiokennsignal entspricht, in üblicher Weise ausgewertet und zur Ansteuerung der Lautsprecher mit den jeweiligen Audiosignalen verwendet. So erfolgt beim Vorliegen einer Monosendung eine Ansteuerung beider Lautsprecher mit dem Signal (R+L)/2, beim Vorliegen einer Stereosendung eine Ansteuerung des linken Lautsprechers mit dem Signal L und des rechten Lautsprechers mit dem Signal R und beim Vorliegen einer zweisprachigen Sendung eine Wiedergabe der Sendung in der jeweils mittels der Bedieneinheit ausgewählten Sprache.

Wie sich aus den vorherigen Ausführungen ergibt, wird bei den gezeigten Ausführungsbeispielen das Audiokennsignal mit Hilfe eines Mikrocontrollers erzeugt, welcher anhand der ihm zugeführten Steuersignale SS1 und SS2 erkennt, in welcher Weise das Hilfsträgersignal moduliert werden muss. Die zeitliche Synchronisierung zwischen dem Hilfsträgersignal und den Zeilenimpulsen des Videosignals kann auf zwei Wegen erreicht werden. Beim ersten Ausführungsbeispiel regelt der Mikrocontroller 7 seine Ausgangssignale in Abhängigkeit vom empfangenen Synchronsignal selbst nach. Beim zweiten Ausführungsbeispiel gibt der Mikrocontroller 13 einen Vergleichsimpuls VG aus, welcher mit den Synchronimpulsen phasenverglichen wird. Mit dem Ausgangssignal des Phasenvergleichers erfolgt eine Nachregelung eines steuerbaren Oszillators, dessen Ausgangssignal dem Mikrocontroller 13 zugeführt wird.

## Patentansprüche

1. Vorrichtung zur Erzeugung eines Audiokennsignals, welche aufweist:
ein Empfangsteil (4), welches ausgangsseitig ein Videosignal (V), ein Linkskanal-Audiosignal (L) und ein Rechtskanal-Audiosignal (R) zur Verfügung stellt, einen Synchronsignalseparator (6) zur Abtrennung eines Synchronsignals (SY) aus dem Videosignal, einen Hilfsträgergenerator, der an seinem Ausgang ein mit dem Videosignal synchronisiertes, amplitudenmoduliertes Hilfsträgersignal als Audiokennsignal (K) zur Verfügung stellt, einen Audiomodulator (9), welchem eingangsseitig das Linkskanal-Audiosignal (L), das Rechtskanal-Audiosignal (R) und das Audiokennsignal (K) zugeführt werden und welcher ausgangsseitig ein erstes Tonträgersignal (T1) und ein zweites Tonträgersignal (T2) zur Verfügung stellt, wobei das zweite Tonträgersignal mit dem Audiokennsignal moduliert ist, und einen HF-Modulator (5) zur Erzeugung eines HF-Signals aus dem Videosignal und den beiden Tonträgersignalen, **gekennzeichnet durch** eine Umwandlungseinheit (10) zur Umwandlung eines in einem Empfangssignal des Empfangsteils enthaltenen VPS-Signals, das Informationen zur Kennzeichnung eines das Video- oder Bildsignal begleitenden Audiosignals als Monosendung, Stereosendung oder zweisprachiges Audiosignal aufweist, in Steuersignale (SS1, SS2), die dem Eingang des Hilfsträgergenerators zugeführt werden und jeweils einer Einbit-Information entsprechen und Informationen darüber enthalten, ob das übertragene Audiosignal das Monosignal, das Stereosignal oder das zweisprachige Audiosignal ist, wobei der Hilfsträgergenerator einen Mikrocontroller (7, 13) umfasst, der an seinem Ausgang das Audiokennsignal bereitstellt, und wobei der Mikrocontroller (7) des Hilfsträgergenerators entweder mit Festoszillator ausgebildet ist und an seinem Eingang das Synchronsignal (SY) empfängt, oder der Mikrocontroller (13) zur Erzeugung von Vergleichsimpulsen (VG) dient, welche in einem Phasenvergleicher (11) mit den Synchronsignalen (SY) verglichen werden, wobei der Phasenvergleicher (11) ausgangsseitig mit einem steuerbaren Oszillator (12) verbunden ist, und der Hilfsträgergenerator (13) aus dem Ausgangssignal des steuerbaren Oszillators (12) und den Steuersignalen (SS1, SS2) das Audiokennsignal bereitstellt.

2. Vorrichtung nach Anspruch 1, **dadurch gekennzeichnet, dass** dass das Audiokennsignal beim Vorliegen eines Monosignals ein nichtamplitudenmoduliertes Hilfsträgersignal ist.

3. Vorrichtung nach einem der vorhergehenden Ansprüche, **dadurch gekennzeichnet, dass** das Audiokennsignal beim Vorliegen eines Stereosignals ein mit einem ersten Bruchteil der Zeilenfrequenz des Videosignals amplitudenmoduliertes Hilfsträgersignal ist.

4. Vorrichtung nach einem der vorhergehenden Ansprüche, **dadurch gekennzeichnet, dass** das Audiokennsignal beim Vorliegen eines zweisprachigen Audiosignals ein mit einem zweiten Bruchteil der Zeilenfrequenz des Videosignals amplitudenmoduliertes Hilfsträgersignal ist.

5. Vorrichtung nach einem der vorhergehenden Ansprüche, **dadurch gekennzeichnet, dass** der HF-Modulator (5) ausgangsseitig mit einem herkömmlichen Fernsehgerät (3) verbunden ist.

6. Vorrichtung nach einem der vorhergehenden Ansprüche, **dadurch gekennzeichnet, dass** sie Bestandteil einer Kopfstation (2) ist.

7. Vorrichtung nach einem der vorhergehenden Ansprüche, **dadurch gekennzeichnet, dass** sie Bestandteil eines Stereo-Modulators ist.

## Claims

1. An apparatus for generating an audio identifying signal which comprises:
a reception part (4) providing on the output side a video signal (V), a left channel audio signal (L) and a right channel audio signal (R), a synchronous signal separator (6) for separating a synchronous signal (SY) from the video signal, an auxiliary carrier generator providing at its output an amplitude-modulated auxiliary carrier signal synchronised with the video signal as an audio identifying signal (K), an audio modulator (9) to which on the input side the left channel audio signal (L), the right channel audio signal (R) and the audio identifying signal (K) are delivered, and which on the output side provides a first sound carrier signal (T1) and a second sound carrier signal (T2), the second sound carrier signal being modulated with the audio identifying signal, and an HF modulator (5) for generating an HF signal from the video signal and the two sound carrier signals, **characterised by** a conversion unit (10) for converting a VPS signal contained in a received signal of the reception part, which has information for identifying an audio signal accompanying the video or image signal as a mono transmission, stereo transmission or bilingual audio signal, into control signals (SS1, SS2) which are delivered to the input of the auxiliary carrier generator and respectively correspond to a piece of one-bit information and contain information regarding whether the transmitted audio signal is the mono signal, the stereo signal or the bilingual audio signal, the auxiliary carrier generator comprising a microcontroller (7, 13) which at its output provides the audio identifying signal, and the microcontroller (7) of the auxiliary carrier generator either being formed with a fixed oscillator and receiving the synchronous signal (SY) at its input, or the microcontroller (13) serving to generate comparison pulses (VG) which are compared with the synchronous signals (SY) in a phase comparator (11), the phase comparator (11) being connected on the output side to a controllable oscillator (12), and the auxiliary carrier generator (13) providing the audio identifying signal from the output signal of the controllable oscillator (12) and the control signals (SS1, SS2).

2. The apparatus according to Claim 1, **characterised in that** the audio identifying signal is a non-amplitude-modulated auxiliary carrier signal when there is a mono signal.

3. The apparatus according to any of the preceding claims, **characterised in that** the audio identifying signal is an auxiliary carrier signal amplitude-modulated with a first fraction of the line frequency of the video signal when there is a stereo signal.

4. The apparatus according to any of the preceding claims, **characterised in that** the audio identifying signal is an auxiliary carrier signal amplitude-modulated with a second fraction of the line frequency of the video signal when there is a bilingual audio signal.

5. The apparatus according to any of the preceding claims, **characterised in that** the HF modulator (5) is connected on the output side to a conventional television set (3).

6. The apparatus according to any of the preceding claims, **characterised in that** it is a component of a head station (2).

7. The apparatus according to any of the preceding claims, **characterised in that** it is a component of a stereo modulator.

## Revendications

1. Dispositif pour générer un signal d'identification audio, qui comporte:
une partie de réception (4) qui met à disposition, côté
sortie, un signal vidéo (V), un signal audio de canal gauche (L) et un signal audio de canal droit (R), un séparateur de signal de synchronisation (6) pour séparer un signal de synchronisation (SY) du signal vidéo, un générateur de sous-porteuse qui met à disposition, à sa sortie, un signal de sous-porteuse synchronisé avec le signal vidéo et modulé en amplitude comme signal d' identification audio (K), unmodulateur audio (9), auquel le signal audio de canal gauche (L), le signal audio de canal droit (R) et le signal d'identification audio (K) sont acheminés côté entrée et qui met à disposition, côté sortie, un premier signal de porteuse son (T1) et un second signal de porteuse son (T2), dans lequel le second signal de porteuse son est modulé avec le signal d'identification audio, et un modulateur HF (5) pour générer un signal HF à partir du signal vidéo et des deux signaux de porteuse son, **caractérisé par** une unité de conversion (10) pour convertir un signal VPS contenu dans un signal de réception de la partie de réception, qui présente des informations pour identifier un signal audio accompagnant le signal vidéo ou le signal image comme émission mono, émission stéréo ou signal audio bilingue, en signaux de commande (SS1, SS2), qui sont acheminés à l'entrée du générateur de sous-porteuse, qui correspondent respectivement à une information d' un bit et qui contiennent des informations pour savoir si le signal audio transmis est le signal mono, le signal stéréo ou le signal audio bilingue, dans lequel le générateur de sous-porteuse comprend un microcontrôleur (7, 13) qui élabore, à sa sortie, le signal d'identification audio et dans lequel le microcontrôleur (7) du générateur de sous-porteuse est réalisé avec un oscillateur fixe et reçoit, à son entrée, le signal de synchronisation (SY) ou le microcontrôleur (13) sert à générer des impulsions de comparaison (VG), qui sont comparées dans un comparateur de phase (11) aux signaux de synchronisation (SY), le comparateur de phase (11) étant connecté, côté sortie, à un oscillateur (12) pouvant être commandé et le générateur de sous-porteuse (13) élaborant le signal d'identification audio à partir du signal de sortie de l'oscillateur (12) pouvant être commandé et des signaux de commande (SS1, SS2).

2. Dispositif selon la revendication 1, **caractérisé en ce que** le signal d'identification audio est un signal de sous-porteuse non modulé en amplitude lorsqu'un signal mono est présent.

3. Dispositif selon l'une quelconque des revendications précédentes, **caractérisé en ce que** le signal d'identification audio est un signal de sous-porteuse modulé en amplitude avec une première fraction de la fréquence de lignes du signal vidéo lorsqu'un signal stéréo est présent.

4. Dispositif selon l'une quelconque des revendications précédentes, **caractérisé en ce que** le signal d'identification audio est un signal de sous-porteuse modulé en amplitude avec une seconde fraction de la fréquence de lignes du signal vidéo lorsqu'un signal audio bilingue est présent.

5. Dispositif selon l'une quelconque des revendications précédentes, **caractérisé en ce que** le modulateur HF (5) est connecté, côté sortie, à un téléviseur traditionnel (3).

6. Dispositif selon l'une quelconque des revendications précédentes, **caractérisé en ce qu'**il fait partie d'un poste de tête (2).

7. Dispositif selon l'une quelconque des revendications précédentes, **caractérisé en ce qu'**il fait partie d'un modulateur stéréo.
